Europäisches Patentamt

European Patent Office

Office européen des brevets

(11) Numéro de publication: **0 484 217 B1**

## FASCICULE DE BREVET EUROPEEN

(45) Date de publication de fascicule du brevet: **08.02.95**

(51) Int. Cl.6: **C08L 5/00**, C08K 5/00, E21B 33/138, E21B 43/25

(21) Numéro de dépôt: **91402872.5**

(22) Date de dépôt: **28.10.91**

(54) **Gel de scléroglucane appliqué à l'industrie pétrolière.**

(30) Priorité: **29.10.90 FR 9013385**

(43) Date de publication de la demande:
**06.05.92 Bulletin 92/19**

(45) Mention de la délivrance du brevet:
**08.02.95 Bulletin 95/06**

(84) Etats contractants désignés:
**DE DK GB IT NL**

(56) Documents cités:
**EP-A- 0 104 927
EP-A- 0 302 544
EP-A- 0 390 282
FR-A- 2 600 336
US-A- 4 647 312**

(73) Titulaire: **ELF AOUITAINE
Tour Elf,
2, Place de la Coupole,
La Défense 6
F-92400 Courbevoie (FR)**

(72) Inventeur: **Pirri, Rosangela
Chemin Mesplède
F-64121 Montardon (FR)**
Inventeur: **Gadioux, Jacques
Ouartier Magret
F-64300 Orthez (FR)**
Inventeur: **Rivenq, Richard
17, rue Idrac
F-31000 Toulouse (FR)**

(74) Mandataire: **Boillot, Marc
ELF AOUITAINE
Division Propriété Industrielle
Tour Elf
F-92078 Paris la Défense Cédex 45 (FR)**

## Description

La présente invention a pour objet de nouvelles compositions réticulantes pour polysaccharides, en particulier le scléroglucane. Elle concerne également des compositions de gels aqueux incluant ces compositions réticulantes ainsi qu'un procédé pour leur injection et leurs utilisations, en particulier en exploitation pétrolière.

Il est connu d'utiliser différents types de polymères, comme agent épaississant ou viscosifiant permettant d'augmenter de manière substantielle la viscosité de l'eau ou de solutions aqueuses. Les polymères utilisés le plus généralement sont soit des polymères synthétiques du type polyacrylamide, polyvinyl-pyrrolidone ou polyvinyl-sulfonate et leurs dérivés, soit des polymères naturels tels que des protéines à haute masse moléculaire telles que la gélatine ou des polysaccharides extraits de grains tels que la gomme guar ou d'algues tels que les alginates ou les carraghénanes ou des biopolymères produits par fermentation initiée par des bactéries ou des champignons, tel le scléroglucane connu pour son haut pouvoir viscosifiant.

Il est connu également que, pour augmenter le pouvoir épaississant de ces polymères hydrosolubles, on peut favoriser des réactions de réticulations intermoléculaires, par voie chimique ou physique, réalisant ainsi des gels aqueux à structure tridimensionnelle.

De tels gels sont utilisés dans l'industrie pétrolière, notamment pour améliorer le rendement de certaines exploitations difficiles par exemple pour prévenir les venues d'eau dans certains puits de production au niveau d'aquifère actif en modifiant la perméabilité à l'eau du réservoir aquifère, ou encore pour la modification des profils de perméabilité. Le brevet US 4647312 décrit en particulier un gel aqueux comprenant une phase aqueuse et une proportion adéquate d'un produit obtenu par réticulation de scléroglucane avec un tetrachlorure de zirconium en présence d'un agent de réticulation.

Du fait de l'utilisation de scléroglucane, un tel gel possède un pouvoir viscosifiant élevé. Il présente toutefois un inconvénient majeur dans la mesure où il ne peut être utilisé en particulier en eau de mer car le chlorure de zirconium précipite en présence d'ions divalents, tels $Ca^{++}$, $Mg^{++}$.

Les gels aqueux synthétisés jusqu'à maintenant présentent deux inconvénients importants : d'abord une faible stabilité dans des milieux d'exploitation difficile, du fait de la salinité mais surtout de températures élevées, et ensuite dans ces cas une cinétique de réticulation trop rapide et/ou incontrôlable qui se traduit par un colmatage immédat du gisement au voisinage des puits d'injection, même en cas de mélange in situ. De façon générale, pour éviter le colmatage en cours d'injection, tout phénomène ou opération pouvant créer ou introduire des particules au niveau du gisement doit être évité.

On a maintenant trouvé que l'utilisation de complexes hydrosolubles de cations métalliques polyvalents, en particulier de zirconium et de titane, comme agents de réticulation du scléroglucane permettait d'obtenir des gels aqueux à fort pouvoir viscosifiant, stables même en eau de mer et à haute température, et dont la cinétique de réticulation est contrôlable.

La présente invention a pour objet de nouvelles compositions de gels aqueux comprenant du scléroglucane et un complexe de cation métallique polyvalent caractérisé en ce qu'elles comprennent de l'eau salée conforme à la norme ASTM D1141-50T de 150 à 5000 ppm de scléroglucane, de 100 à 1000 ppm de cation métallique polyvalent complexé par un monoacide organique alphahydroxylé, le rapport molaire de l'acide organique alphahydroxylé sur le cation métallique étant compris entre 0,5 et 4, et une base faible, par exemple, de l'ammoniaque ou une amine, de masse inférieure à celle du cation métallique.

La présente invention a en particulier pour objet de nouveaux gels aqueux dans lesquels le complexe métallique polyvalent est choisi dans le groupe constitué par le zirconium Zr(IV) et le titane Ti(IV).

Parmi les acides organiques alphahydroxylés, on choisira plus particulièrement un acide alphahydroxycarboxylique tel que l'acide lactique ou l'acide malique.

Avantageusement, la quantité de base faible introduite dans la composition aqueuse du complexe est en masse préférentiellement inférieure à celle du cation métallique, pour permettre de solubiliser le complexe zirconium alphahydroxylé non soluble dans l'eau.

Comme la force du complexe est directement liée au rapport molaire acide organique/cation métallique, plus ce rapport est fort, plus la force du complexe est élevée (toutes choses étant égales par ailleurs). La force du complexe conditionne sa stabilité en eau de mer, celle-ci étant d'autant plus grande que la force du complexe est élevée.

Le scléroglucane est un homo-polysaccharide ramifié non ionique dont la chaîne principale est constituée de successions de motifs de type $\beta$1-3D-glucose, substitué tous les 3 motifs par une unité $\beta$1-6D-glucose.

Le scléroglucane est obtenu par fermentation de milieux contenant des hydrates de carbone initiée par des champignons Sclérotium et notamment par un champignon de type Sclerotium Rolfsii (ATCC 15206).

Les concentrations en poids de scléroglucane préférées sont comprises entre 200 et 2000 ppm. Les concentrations en poids de zirconium complexés préférées sont comprises entre 1000 et 5000 ppm.

Les complexes de zirconium susceptibles de former un gel aqueux avec le scléroglucane sont des complexes de zirconium à base d'acide lactique, le rapport molaire acide lactique/zirconium étant préférentiellement compris entre 0,5 et 4 et plus particulièrement entre 2 et 4. Si l'acide organique utilisé est l'acide malique, le rapport acide malique/zirconium est compris préférentiellement entre 0,5 et 1,5. On peut citer à titre d'exemple deux produits commerciaux vendus par SPCI (Société des Produits Chimiques Industriels) sous les noms de ZIRCOMPLEX PN ou ZIRCOMPLEX PA.

Plusieurs méthodes peuvent être utilisées pour la préparation de ces gels.

Une première méthode consiste à mélanger de mannière simultanée tous les constituants du gel et à les faire réagir dans des conditions convenant à la réticulation. De manière avantageuse, on ajoutera dans le cas d'utilisation des complexes les moins complexés (par exemple le ZIRCOMPLEX PN) un polyacide organique tel l'acide citrique comme additif de la composition de réticulant, pour stabiliser la solution et éviter par exemple la formation de complexe colloïdal et la précipitation en eau de mer. On constate en effet que la présence d'acide citrique améliore la stabilité en eau de mer en particulier de la solution de complexant, en particulier pour de faibles concentrations de zirconium. Toutefois, la quantité de polyacide organique ne devra pas dépasser une quantité limite au risque d'empêcher la réticulation. Pour une solution contenant du ZIRCOMPLEX PN à 2000 ppm, la stabilisation optimale en tube a été obtenue pour une concentration de $2.10^{-3}$ mol d'acide citrique (correspondant à 352 ppm) et un rapport acide citrique/Zr égal à 0,176. En milieu poreux, le rapport optimal des concentrations acide citrique/Zr est égal à 0,5. Pour une concentration en acide citrique de $10^{-2}$ mol/l (soit 1760 ppm pour du Zr à 2000 ppm), la réticulation n'a pas lieu. Préférentiellement, le rapport acide citrique/Zr ne doit pas dépasser 0,8 même pour une utilisation en milieu poreux.

Plus le rapport molaire acide lactique/zirconium augmente, plus le complexe est stable en particulier en eau de mer. Une trop grande stabilité toutefois doit être évitée car elle a pour conséquence d'empêcher la réticulation.

Dans le cas d'utilisation de complexe trop stable (ZIRCOMPLEX PA, par exemple), on ajoutera avantageusement un composé basique tel la soude comme constituant du gel pour déstabiliser le complexe. On constate en effet qu'il n'y a pas formation de gel dans ce cas si le pH n'est pas suffisamment élevé et en particulier si le pH n'est pas supérieur ou égal à 9. Le composé basique pourra être, par exemple, de la soude, de l'ammoniaque ou de l'éthanolamine à chaud.

Une autre méthode de préparation du gel consiste à réaliser d'une part une solution de scleroglucane et d'autre part une solution de réticulant. On entend par solution de réticulant, une solution comportant éventuellement outre le complexe de cation métallique, un polyacide organique ou un composé basique. La gélification est alors réalisée in situ, la mise en place se faisant par injection séquentielle de solution de biopolymère et de solution de réticulant.

Un réseau de polymère réticulé se forme dans la matrice de la formation et réduit progressivement la perméabilité de celle-ci.

On décrit dans le brevet US 4647312 un tel procédé d'injection séquentiel. On y indique que l'ordre d'injection des différentes solutions n'est pas critique. L'injection de solution de polymère en premier est toutefois recommandée. Il est effectivement usuel dans le métier de commencer par injecter le produit principal, c'est-à-dire en l'occurrence la solution de polymère.

On a maintenant trouvé que, contrairement à l'enseignement de l'art antérieur, l'ordre d'injection des compositions aqueuses gélifiantes selon l'invention, était déterminant pour une mise en place homogène et une bonne propagation du gel et que cet ordre est l'inverse de celui communément admis comme préférentiel par la profession.

L'invention se rapporte également à un procédé de mise en place des compositions sous forme d'une part de solution de scléroglucane, et d'autre part d'un complexe d'un cation métallique polyvalent et d'un acide organique en particulier alphahydroxylé, lequel procédé consiste à faire des injections successives alternées d'abord de solution de réticulant et ensuite de solution du polymère. On injecte dans le puits au niveau de la formation à traiter d'abord une solution de réticulant selon l'invention et ensuite une solution de scleroglucane en particulier à teneur comprise entre 150 et 5000 ppm. On réalise ainsi, par réticulations successives, une multicouche adsorbée de polymère par l'intermédiaire de l'agent de réticulation, allant jusqu'à la formation du gel complet. Cette méthode est particulièrement adaptée pour les gisements consolidés de faible perméabilité, en particulier inférieure à 200 mD mais pouvant atteindre 600 ou 700 mD. Elle a également l'avantage de contrôler parfaitement la perméabilité du milieu sans risque de colmatage intempestif de la formation, même pour un nombre élevé d'injections successives, par adaptation du nombre de couches de la multicouche.

Les gels de l'invention sont particulièrement bien adaptés aux applications pétrolières, notamment pour l'amélioration du balayage à l'eau par traitement des puits injecteurs ou pour la prévention des venues d'eau par traitement des puits producteurs, grâce à leur facilité d'injection mais aussi à leur stabilité dans des conditions d'utilisation difficiles (haute salinité et haute température).

De façon générale, ils sont également utilisés pour toute application nécessitant des gels aqueux stables présentant des propriétés mécaniques élastiques élevées.

Ayant décrit l'invention dans son contexte général, les exemples suivants permettront de mieux l'illustrer sans toutefois la limiter.

Le scléroglucane utilisé est du scléroglucane raffiné commercialisé par la société SANOFI BIO-INDUSTRIES sous le nom d'ACTIGUM CS11. Les complexes utilisés sont les ZIRCOMPLEX PN et ZIRCOMPLEX PA commercialisés par la société SPCI.

Une analyse de ces solutions aqueuses concentrées montre que le ZIRCOMPLEX PN est constitué de 9,9 % en masse de zirconium (densité $d = 1,23$), de 25,6 % en masse d'acide lactique et de 5,5 % en masse d'ammoniaque et ions d'ammonium, soit un rapport molaire acide lactique/zirconium égal à 2,6, tandis que le ZIRCOMPLEX PA, plus complexé, est constitué de 7,3 % en masse de zirconium (densité 1,19), de 24,6 % en masse d'acide lactique et de 4,8 % en masse d'ammoniaque et ions d'ammonium, soit un rapport molaire acide lactique/zirconium égal à 3,4.

Exemple 1 : Différence de comportement du $ZrCl_4$ et des Zircomplex.

- D'une part, on a introduit dans un même volume d'eau distillée d'abord, d'eau avec 36 g/l de NaCl, ensuite, d'eau de mer ASTM (eau de mer reconstituée avec différents cations suivant la norme D1141 - 50T modifiée pour avoir pH de 7,2) enfin, un même volume de chlorure de zirconium $ZrCl_4$. On a obtenu dans les deux premiers cas respectivement deux solutions limpides. Dans l'eau de mer ASTM, le chlorure de zirconium a précipité : il y a donc instabilité avec l'eau de mer.
- On a introduit dans de l'eau de mer ASTM du ZIRCOMPLEX PN à raison de 2000 ppm et de l'acide citrique à raison de $2.10^{-3}$ mol/l. On a obtenu une solution stable au moins 40 heures à 60°C. L'introduction de scléroglucane dans une telle solution entraîne la formation de gel. On constate que si la proportion d'acide citrique est augmentée, toutes choses étant égales par ailleurs, la réticulation avec le scleroglucane ne s'effectue plus.
- On a introduit dans de l'eau de mer ASTM du ZIRCOMPLEX PA. La solution obtenue est stable quelle que soit la concentration de ZIRCOMPLEX PA. L'introduction dans une telle solution de scléroglucane ou de scléroglucane additionnée de soude pour que le pH soit égal à 9, entraîne la formation de gel. Si la quantité de soude est diminuée, de sorte que le pH de la solution devient inférieur à 9, il ne se forme plus de gel.

En milieu poreux réel, les quantités limites sont toujours plusieurs fois supérieures à celles obtenues aux essais en laboratoire.

Exemple 2 : Stabilité des ZIRCOMPLEX seuls en solution dans une eau de mer ASTM à 40°C.

| ZIRCOMPLEX PN concentration (ppm) | 2000 | 5000 | 10000 | 15000 | 20000 |
|---|---|---|---|---|---|
| Stabilité | <10 h | 4jours | 1 mois | >1mois | >1mois |

La stabilité du ZIRCOMPLEX PN en solution dépend de la concentration.

Les solutions contenant du ZIRCOMPLEX PA sont stables en eau de mer ASTM même très diluées. Il faut se placer en milieu alcalin pour obtenir une réticulation du scléroglucane par le ZIRCOMPLEX PA.

Exemple 3 : Stabilité du ZIRCOMPLEX PN à 2000 ppm additionné d'acide citrique en solution dans une eau de mer à 40°C.

| Acide citrique conc. moy. mol/l | 0 | $2x10^{-3}$ | $4x10^{-3}$ | $6x10^{-3}$ | $8x10^{-3}$ |
|---|---|---|---|---|---|
| Stabilité | <10h | troubles en 48h | limpide 20jours | >20jours | >20jours |

La stabilité des solutions augmente avec la concentration en acide citrique.

Exemple 4 : Gélification

On a travaillé avec des mélanges contenant du scléroglucane à 4000 ppm, du ZIRCOMPLEX PN à 2000 ppm dans une eau de mer ASTM à 40°C, et de l'acide citrique à concentration variable. On a mesuré le temps au bout duquel il y avait gélification.

| conc.acide citrique mol/l | 0 | $10^{-4}$ | $5x10^{-4}$ | $10^{-3}$ | $2x10^{-3}$ | $4x10^{-3}$ | $6x10^{-3}$ | $8x10^{-3}$ |
|---|---|---|---|---|---|---|---|---|
| force du gel | gel fort | gel fort | gel fort | gel fort | gel fort | gel moyen | pas de gel | pas de gel |
| temps heures | 48 | 48 | 48 | 72 | 96 | 96 | 120 | 120 |

**(Gel fort = la masse de gel fait bloc**

**Gel moyen = il subsiste un petit écoulement)**

Les mélanges contenant plus de $6x10^{-3}$ mol/l d'acide citrique ont gélifié après 1 semaine.

L'addition d'acide citrique ralentit la gélification. Il faut un compromis entre la stabilité en eau de mer et l'aptitude à réticuler.

Pour une gélification en tube, la concentration en acide citrique maximale est de $2x10^{-3}$ mol/l mais pour une gélification en milieu poreux elle peut être supérieure.

Les gels obtenus sont réversibles par addition d'excès d'acide citrique.

En tube : préparation d'un gel à partir de scléroglucane à 4000 ppm et de ZIRCOMPLEX PN à 2000 ppm additionné de $2x10^{-3}$ mol/l d'acide citrique. Il faut attendre 48h pour obtenir le gel. On ajoute ensuite de l'acide citrique pour être à une concentration supérieure à $10^{-2}$ mol/l. Après agitation, le mélange redevient fluide et ne gélifie plus.

Exemple 5 : Force des gels obtenus.

Des mesures de module élastique E en Pascal par mètre (Pa/m) ont été faites pour des solutions contenant l'une ou l'autre des ZIRCOMPLEX PN ou PA dans de l'eau de mer ASTM contenant du scléroglucane à 4000 ppm. Les résultats sont donnés dans le tableau suivant :

| Concentrations Zirconium/ppm | 300 | 400 | 500 | 1000 | 2000 |
|---|---|---|---|---|---|
| ZIRCOMPLEX PN E en Pa/m | 60000 | 130000 | 500000 | 700000 | 800000 |
| ZIRCOMPLEX PA E en Pa/m | 70000 | 150000 | 700000 | 750000 | 900000 |

Les mesures de E sont effectuées à l'aide d'un analyseur de texture STEVENS LFRA. On obtient des valeurs de E variant de 6000 à 900000 Pa/m suivant la concentration croissant en zirconium. Les gels subissent peu de synerèse à 90°C et sont stables trois mois au moins.

On remarque qu'à partir d'une certaine concentration en zirconium, on arrive à un palier pour les valeurs de E. Pour les gels à partir de ZIRCOMPLEX PA, la réticulation est très rapide (quelques heures) tandis que pour le ZIRCOMPLEX PN, il faut attendre 72 heures au minimum.

Exemple 6 : Influence du pH sur la cinétique de gélification dans le cas du ZrPA.

On a réalisé des gels de scleroglucane avec le Zircomplex PA. Une solution aqueuse de concentration fixée à 5000 ppm de scleroglucane est mélangée avec une solution aqueuse contenant du Zircomplex PA. La solution est homogénéisée par agitation magnétique en même temps que le pH est amené aux valeurs voulues par addition de soude NaOH. On laisse les mélanges reposer pendant 12 heures. Tous les mélanges, préparés dans une eau de mer ASTM, ont une concentration en scleroglucane égale à 4200 ppm et une concentration en Zircomplex égale à 2000 ppm, .

Les mélanges sont ensuite introduits dans des tubes à essai fermés par un capuchon et évalués de la façon suivante en fonction du temps. On considère qu'il y a gélification (symbole +) si le contenu du tube ne s'écoule pas, le tube ayant été incliné à 45° par rapport à l'horizontale, capuchon vers le bas. Dans le cas contraire, on a toujours une solution visqueuse (symbole -). Dans le cas intermédiaire (symbole + et -), tout le gel se glisse, étiré, le long du tube. Les résultats obtenus sont donnés dans le tableau suivant.

| pH | 6 | 8 | 9 | 10 | 11 | 12 |
|---|---|---|---|---|---|---|
| | - | - | + | + | + | + |

En desous du pH = 9, il n'y a pas réticulation.

Exemple 7 : Reversibilité mécanique des gels scleroglucane/ZIRCOMPLEX PN (ZrPN) ou ZIRCOMPLEX PA (ZrPA).

L'un des avantages des gels de polymères hydrosolubles réticulés physiquement par des cations métalliques polyvalents est leur "réversibilité mécanique", c'est-à-dire qu'on peut diminuer leur viscosité par cisaillement mécanique, mais une fois cette contrainte supprimée, le gel reprend la plupart de ses caractéristiques initiales.

L'exemple suivant montre que les gels scleroglucane/ZIRCOMPLEX PN sont parfaitement réversibles mécaniquement : soit des gels de scléroglucane/ZrPN ou scléroglucane/ZrPA à 4000 ppm de polymère et différentes concentrations en Zr réalisés avec de l'eau de mer ASTM. L'évaluation des modules élastiques E (en Pa/m) se fait après un temps suffisamment long pour que le gel se soit formé (3 jours pour ZrPN). Puis les gels sont soumis à une violente agitation mécanique (1 minute à 1000 t/mn par une turbine de type ultra-Turrax), le gel redevient une solution fluide. Après 3 jours de repos, on réévalue les modules élastiques à l'aide d'un analyseur de texture STEVENS LFRA.

Le tableau suivant indique les valeurs de E avant et après cisaillement mécanique.

| Concentration en Zr    ppm | 300 | 400 | 500 | 1000 | 2000 |
|---|---|---|---|---|---|
| ZrPA    Avant cisaillement | 70000 | 150000 | 700000 | 750000 | 900000 |
| Après cisaillement | 70000 | 150000 | 750000 | 800000 | 1000000 |
| ZrPN    Avant cisaillement | 60000 | 130000 | 500000 | 700000 | 800000 |
| Après cisaillement | 50000 | 100000 | 450000 | 600000 | 800000 |

On observe que le gel reprend ses caractéristiques après cisaillement mécanique et un temps de repos.

Exemple 8 : Evaluation de la réduction de perméabilité à l'eau d'un milieu poreux perméable après placement d'un gel Scléroglucane/ZIRCOMPLEX PN par procédé d'injection séquentielle.

Dans un milieu poreux consolidé, peu perméable (perméabilité inférieure à 200 mD), type du grès de Béréa, où il y a des problèmes de propagation du gel par procédé d'injection simultanée, une fois le polymère mis en présence de son agent de réticulation, on propose un procédé d'injection séquentielle "directe" (injection d'une solution de polymère, puis d'une solution de réticulant, puis de l'eau, dans cet ordre) ou "inverse" (injection d'une solution de réticulant, puis d'une solution de polymère, puis de l'eau, dans cet ordre) des différents constituants. On réalise ainsi en même temps le placement et la réticulation in-situ du gel sous forme de "multicouches" de polymère adsorbé, de la manière suivante, par exemple, pour le procédé d'injection "inverse".

- Formation d'une première couche de polymère adsorbé (1er créneau) : injection de 1,5 volume,poreux équivalent d'une solution à l'eau de mer ASTM contenant du Zircomplex PN (2000 ppm en Zr métal), et $2 \times 10^{-3}$ mol/l d'acide citrique, suivi de 2 volumes poreux équivalents d'une solution à l'au de mer ASTM contenant 400 ppm de scleroglucane. Le milieu est balayé par une eau de mer ASTM jusqu'à stabilisation de la pression autour de la cellule. Après stabilisation (24 h), on détermine la perméabilité à l'eau après de traitement.
- Formation de la $n^{\text{ième}}$ couche de polymère adsorbé ($n^{\text{ième}}$ créneau) : procédure identique, c'est-à-dire injection de ZrPN, suivi du scleroglucane et enfin de l'eau.

Pour le mode d'injection "directe", les opérations précédentes sont inversées.

Les résultats obtenus sur la réduction de mobilité et la réduction de perméabilité à l'eau sont donnés dans le tableau suivant, pour l'un et l'autre des modes d'injection "directe" et "inverse" et deux créneaux.

On appelle volume poreux équivalent, l'équivalent du volume des pores communicants de la cellule de grès sur laquelle les tests s'effectuent. Les tests d'injection directe ont été effectués sur une première cellule (cellule 1 de l'échantillon test de roche -ou "plug"- 26) de perméabilité de départ égale à 150 mD et sur une deuxième cellule (cellule 2 du "plug" 26) de perméabilité de départ égale à 170 mD ($R_{Kw}$ et Kw mesurés pour un débit d'injection correspondant à une progression du front de la phase liquide à l'intérieur de l'échantillon égale à 5 m/j).

Les débits d'injection des solutions sont tous équivalents à une progression de 1,25 m/jour.

Les tests d'injection inverse ont été réalisés sur une première cellule (cellule 1 du "plug" 29) de perméabilité égale à 120 mD, et sur une seconde cellule (cellule 2 du "plug" 29) de perméabilité égale à 110 mD.

## Réticulant = ZrPN + acide citrique

| | TRAITEMENT: PLUG 26 | | TRAITEMENT: PLUG 29 | |
|---|---|---|---|---|
| | Injection de : 1- réticulants 2- polymère 3- eau de mer | | Injection de : 1- polymère 2- réticulant 3- eau de mer | |
| | première cellule | seconde cellule | première cellule | seconde cellule |
| Longueur de la cellule | 3 cm | 3 cm | 4 cm | 4 cm |
| Kw initiale | 150 mD | 170 mD | 120 mD | 110 mD |
| $R_{Kw}$ - 1er créneau | 6 | 1,8 | 1,65 | 1,85 |
| $R_{Kw}$ - 2ème créneau | 21 | 13 | 6,5 à 63 | 6 |

Kw = perméabilité à l'eau du milieu poreux (en Darcy)

$R_{Kw}$ = réduction de perméabilité à l'eau

$R_{Kw}$ = Kw avant traitement/Kw après traitement

Le premier créneau est plus efficace pour le "plug" 26. On observe un début de colmatage pour le "plug" 29, première cellule ($R_{Kw}$ : 6,5 à 63).

La propagation est meilleure dans le cas où le réticulant est injecté en premier.

Exemple 9 : Evaluation de la réduction de perméabilité à l'eau d'un milieu poreux perméable après placement d'un gel scleroglucane/zircomplex PA par procédé d'injection séquentielle.

On reproduit les opérations de l'exemple 8 avec un réticulant à base de Zircomplex PA. Seul le procédé d'injection inverse est ici testé sur un même "plug" (perméabilité 75 mD, diamètre 2,27 cm, longueur 3,95 cm, volume 16 $cm^3$, volume poreux 4 $cm^3$) que l'on a coupé en deux de façon à constituer 2 cellules (cellule 1 et cellule 2 du "plug" 18) en fin de manipulation pour étudier l'homogénéité du traitement.

Le mode opératoire est le suivant : on injecte 3 volumes poreux équivalents d'une solution de Zircomplex PA (380 ppm en Zr métal) dans une eau de mer ASTM, suivi de 5 volumes poreux équivalents d'une solution de scleroglucane (à 400 ppm) dans une eau de mer ASTM (pH = 7,2) suivi de 5 volumes poreux équivalents d'une solution d'eau de mer ASTM additionnée de 0,2 g/l de $NaHCO_3$ et de NaOH jusqu'à ajustement du pH à 9. Le milieu est balayé par une eau de mer ASTM durant 2 heures. Les résultats sont présentés dans le tableau suivant. Le suivi de pH est effectué en sortie. Les débits d'injection correspondent tous, sauf stipulation contraire, à une progression de 5 m/j.

8

**Réticulant ZrPA en milieu basique**

|  | TRAITEMENT : PLUG 18 | |
|---|---|---|
|  | 1- Injection de réticulant<br>2- Injection de polymère<br>3- Injection de soude pH =9<br>4- Injection d'eau | |
|  | Première cellule | Seconde cellule |
| Longueur de la cellule | 2 cm | 2 cm |
| Kw initiale | 75 mD | 75 mD |
| RKw 2ème créneau mesuré à 2,5 m/j | 4 | 3,75 |

On observe une bonne homogénéité du traitement sur les deux cellules.

Exemple 10 : Stabilité thermique des gels de scleroglucane/ZIRCOMPLEX.

La stabilité thermique des gels de scléroglucane/ZIRCOMPLEX à différentes concentrations est étudiée grâce à un rhéomètre de type Rhéomat 30 (Contraves) muni d'une cellule étanche avec un mobile à entraînement magnétique (DC44), permettant des mesures à hautes températures (limite de l'appareil = $7500 \times 10^{-3}$ Pa.s). Les résultats sont regroupés dans le tableau suivant.

9

| Température (°C) | | 25 | 75 | 125 | 150 | 165 | 170 |
|---|---|---|---|---|---|---|---|
| Viscosité (Pa-s) à $1s^{-1}$ | (1) | 0,550 | 0,550 | 0,520 | 0,500 | 0,500 à 250 en 5mn | 0,200 |
| | (2) | 2,800 | 2,800 | 2,750 | 2,650 | 2,500 à 0,700 en45mn | 0,600 |
| Limite appareil | (3) | >> 7,500 <------------------------------------------> | | | | | |
| | (4) | >> 7,500 <------------------> | | | 6,000 à 2,250 en 15mn | 1,400 | 1,200 |
| | (5) | >> 7,500 <------------------------------------------->1,200 en3h | | | | 7,500 à | |

(1) Scléroglucane/ZrPN 1000/500 ppm + $2.10^{-3}$ M acide citrique

(2) Scléroglucane/ZrPN 2000/1000 ppm + $2.10^{-3}$M acide citrique

(3) Scléroglucane/ZrPN 4000/2000 ppm + $2.10^{-3}$M acide citrique

(4) Scléroglucane/ZrPN 4000/2000 ppm sans acide citrique

(5) Scléroglucane/ZrPA 1000/500 ppm   pH = 9.

La température limite supérieure d'utilisation de ces gels peut atteindre 170°C.

Exemple 11 : Propagation des solutions de complexes ZrPN et ZrPA en milieu poreux.

On injecte une solution contenant du zirconium à une concentration donnée dans de l'eau distillée et on dose par fluorescence le zirconium en sortie.

L'opération est faite pour du $ZrCl_4$, du ZIRCOMPLEX PN à 400 ppm, du ZIRCOMPLEX PN à 5000 ppm et du ZIRCOMPLEX PA à 4000 ppm.

On appelle Vp le volume des pores, qui correspond au volume accessible dans l'échantillon de milieu poreux.

1 - $ZrCl_4$ :

Lorsqu'on injecte du $ZrCl_4$ à 400 ppm, on ne détecte pas de Zr à la sortie de l'échantillon de milieu poreux.

Le zirconium s'adsorbe trop sur les parois, il n'y a pas de propagation.

2 - <u>ZrPN 400 ppm</u>

| volume injecté en Vp | 0,83 | 1,08 | 1,33 | 1,58 | 1,83 | 2,08 | 2,33 | 2,58 | 2,83 | 3,08 |
|---|---|---|---|---|---|---|---|---|---|---|
| conc. Zr en sortie ppm | <0,1 | <0,1 | 0,5 | 21 | 93 | 187 | 333 | 391 | 400 | 400 |
| % de Zr | 0 | 0 | 0,1 | 5 | 23 | 47 | 83 | 98 | 100 | 100 |

On n'observe plus d'adsorption après 3 Vp, la solution de zircomplexe PN se propage bien.

3 - <u>Zr PN 5000 ppm</u>

| volume injecté en Vp | 0,71 | 1,24 | 1,42 | 1,60 | 1,96 | 2,31 | 3,02 | 4,0 |
|---|---|---|---|---|---|---|---|---|
| Conc. Zr en sortie ppm | <0,1 | 94 | 920 | 1580 | 3390 | 3470 | 4450 | 5000 |
| % de Zr en sortie | 0 | 1,9 | 18 | 32 | 68 | 69 | 89 | 100 |

On n'observe plus d'adsorption après 4 Vp, la solution se propage bien, même si elle est plus concentrée.

EP 0 484 217 B1

4 - <u>ZrPA 400 ppm</u>

| volume injecté en Vp | 0,68 | 1,36 | 2,04 | 2,73 | 3,40 | 4,08 | 4,76 | 5,44 | 6,12 |
|---|---|---|---|---|---|---|---|---|---|
| conc. Zr en sortie ppm | <0,1 | 56 | 284 | 376 | 368 | 380 | 384 | 388 | 400 |
| % Zr en sortie | 0 | 14 | 71 | 94 | 92 | 95 | 96 | 97 | 100 |

On n'observe plus d'adsorption après 3 Vp. Il y a bonne propagation de la solution de ZIRCOMPLEX PA.

**Revendications**

1. Compositions de gels aqueux comprenant du scléruglocane et un complexe de cation métallique polyvalent caractérisées en ce qu'elle comprennent de l'eau salée conforme à la norme ASTM D1141-50T, de 150 à 5000 ppm de scléroglucane, de 100 à 10000 ppm de cation métallique polyvalent complexé par un monoacide organique alphahydroxylé, le rapport molaire de l'acide organique alphahydroxylé sur le cation métallique étant compris entre 0,5 et 4, et une base faible, par exemple ammoniaque ou amine, de masse inférieure à celle du cation métallique.

2. Compositions selon la revendication 1 caractérisées en ce que le cation métallique polyvalent est choisi dans le groupe constitué par les cations du zirconium et du titane.

3. Compositions selon la revendication 1 ou 2 caractérisées en ce que l'acide organique alphahydroxylé est un acide alphahydroxylé carboxylique choisi dans le groupe constitué par l'acide lactique et l'acide malique.

4. Compositions selon l'une des revendications 1 à 3 caractérisées en ce qu'elles comportent 200 à 2000 ppm de scléroglucane.

5. Compositions selon l'une des revendications 1 à 4 caractérisées en ce qu'elles comportent 100 à 5000 ppm de zirconium.

6. Compositions selon l'une des revendications 1 à 5 caractérisées en ce qu'elles comportent en outre de l'acide citrique pour stabiliser le complexe.

7. Compositions selon l'une des revendications 1 à 5 caractérisées en ce qu'elles comportent un composé basique choisi dans le groupe constitué par la soude, l'ammoniaque et l'éthanolamine à chaud, pour déstabiliser le complexe lorsque le rapport molaire acide organique alphahydroxylé sur cation métallique est élevé.

8. Compositions selon l'une des revendications 1 à 5 caractérisées en ce que le rapport molaire acide lactique: Zirconium est compris entre 2 et 4.

9. Compositions selon l'une des revendications 1 à 5 caractérisées en ce que le rapport acide malique: zirconium est compris entre 0,5 et 1,5.

10. Procédé de mise en place des compositions de gel selon les revendications 1 à 9 caractérisé en ce qu'on injecte de manière séquentielle dans le puits au niveau de la formation à traiter d'abord une

12

solution de réticulant renfermant au moins un complexe hydrosoluble de cation métallique polyvalent et ensuite une solution contenant de 150 à 5000 ppm de scléroglucane.

**11.** Procédé selon la revendication 10 caractérisé en ce qu'on effectue plusieurs injections successives.

**12.** Procédé selon l'une des revendications 10 et 11 caractérisé en ce que les injections sont faites au niveau des puits injecteurs.

**Claims**

**1.** Composition of aqueous gels comprising scleroglucane and a polyvalent metallic cation complex, characterised in that they comprise saline in accordance with ASTM Standard D1141-50T, between 150 and 5000 ppm scleroglucane, between 100 and 10000 ppm polyvalent metallic cation complexed by an alphahydroxylated organic mono- acid, the molar ratio of the alphahydroxylated organic acid to the metallic cation being between 0.5 and 4, and a weak base, for example ammonium hydroxide or amine, having a mass which is less than that of the metallic cation.

**2.** Compositions according to Claim 1, characterized in that the polyvalent metallic cation is selected from the group consisting of zirconium and titanium cations.

**3.** Compositions according to Claim 1 or 2, characterised in that the alphahydroxylated organic acid is a carboxylic alphahydroxylated acid selected from the group consisting of lactic acid and malic acid.

**4.** Compositions according to any one of Claims 1 to 3, characterized in that they comprise between 200 and 2000 ppm of scleroglucane.

**5.** Compositions according to any one of Claims 1 to 4, characterised in that they comprise between 100 and 5000 ppm of zirconium.

**6.** Compositions according to any one of Claims 1 to 5, characterised in that they further comprise citric acid in order to stabilise the complex.

**7.** Compositions according to any one of Claims 1 to 5, characterised in that they comprise a base compound selected from the group consisting of soda, ammonium hydroxide and ethanol amine in the hot state in order to destabilise the complex when the molar ratio between the alphahydroxylated organic acid and the metallic cation is high.

**8.** Compositions according to any one of Claims 1 to 5, characterised in that the molar ratio of lactic acid to zirconium is between 2 and 4.

**9.** Compositions according to any one of Claims 1 to 5, characterised in that the ratio of malic acid to zirconium is between 0.5 and 1.5.

**10.** Process for preparing gel compositions according to Claims 1 to 9, characterised in that firstly a solution of crosslinking agent containing at least one water-soluble complex of polyvalent metallic cations and then a solution containing between 150 and 5000 ppm of scleroglucane are injected sequentially into a well at the formation to be treated.

**11.** Process according to Claim 10, characterised in that a plurality of successive injections is performed.

**12.** Process according to either of Claims 10 and 11, characterised in that the injections are made at the injector wells.

**Patentansprüche**

**1.** Zusammensetzungen wässeriger Gele enthaltend Skleroglukan und einen polyvalenten kationischen Metallkomplex, dadurch gekennzeichnet, daß sie Salzwasser gemäß der Norm ASTM D1141-50T, zwischen 150 bis 5000 ppm Skleroglukan, zwischen 100 und 10000 ppm polyvalentes kationisches Metall, das durch eine alphahydroxylierte organische einbasige Säure komplexiert ist, wobei das Molverhältnis der alphahydroxylierten organischen Säure zum kationischen Metall zwischen 0,5 und 4 liegt, und eine schwache Base, beispielsweise Ammoniak oder ein Amin, enthalten, deren Masse geringer als die des kationischen Metalls ist.

2. Zusammensetzungen nach Anspruch 1, dadurch gekennzeichnet, daß das polyvalente kationische Metall aus der Gruppe Zirkonium- und Titankation gewählt ist.

3. Zusammensetzungen nach Anspruch 1 oder 2, dadurch gekennzeichnet, daß die alphahydroxylierte organische Säure eine karboxylierte alphahydroxylierte Säure ist, die aus der Gruppe Milchsäure und Maleinsäure gewählt ist.

4. Zusammensetzungen nach einem der Ansprüche 1 bis 3, dadurch gekennzeichnet, daß sie 200 bis 2000 ppm Skleroglukan enthalten.

5. Zusammensetzungen nach einem der Ansprüche 1 bis 4, dadurch gekennzeichnet, daß sie 100 bis 5000 ppm Zirconium enthalten.

6. Zusammensetzungen nach einem der Ansprüche 1 bis 5, dadurch gekennzeichnet, daß sie außerdem Zitronensäure zur Stabilisierung des Komplexes enthalten.

7. Zusammensetzungen nach einem der Ansprüche 1 bis 5, dadurch gekennzeichnet, daß sie eine basische Verbindung enthalten, die aus der Gruppe Soda, Ammoniak und Ethanolamin im warmen Zustand gewählt ist, um den Komplex zu destabilisieren, wenn das Molverhältnis der alphahydroxylierten organischen Säure zu dem metallischen Kation hoch ist.

8. Zusammensetzungen nach einem der Ansprüche 1 bis 5, dadurch gekennzeichnet, daß das Molverhältnis von Milchsäure zu Zirkonium zwischen 2 und 4 liegt.

9. Zusammensetzungen nach einem der Ansprüche 1 bis 5, dadurch gekennzeichnet, daß das Verhältnis von Maleinsäure zu Zirkonium zwischen 0,5 und 1,5 liegt.

10. Verfahren zur Bereitstellung von Gel-Zusammenzetzungen nach den Ansprüchen 1 bis 9, dadurch gekennzeichnet, daß man in den Schacht auf Höhe der zu bearbeitenden Formation nacheinander zuerst eine Vernetzungzmittellösung, die zumindest einen wasserlöslichen polyvalenten kationischen Metallkomplex enthält und dann eine 150 bis 5000 ppm Skleroglukan enthaltende Lösung injiziert.

11. Verfahren nach Anspruch 10, dadurch gekennzeichnet, daß man mehrere Injektionen hintereinander durchführt.

12. Verfahren nach einem der Ansprüche 10 und 11, dadurch gekennzeichnet, daß man die Injektionen auf Höhe der Schachtinjektoren vornimmt.